(19) Europäisches Patentamt
European Patent Office
Office européen des brevets

(11) **EP 4 476 503 B1**

(12) **EUROPEAN PATENT SPECIFICATION**

(45) Date of publication and mention
of the grant of the patent:
**24.12.2025   Bulletin 2025/52**

(21) Application number: **22709219.4**

(22) Date of filing: **09.02.2022**

(51) International Patent Classification (IPC):
*G01D 5/20* (2006.01)        *G01D 3/08* (2006.01)

(52) Cooperative Patent Classification (CPC):
**G01D 3/08; G01D 5/2073**

(86) International application number:
**PCT/EP2022/053089**

(87) International publication number:
**WO 2023/151783 (17.08.2023 Gazette 2023/33)**

(54) **MONITORING A RESOLVER**

ÜBERWACHUNG EINES RESOLVERS

SURVEILLANCE D'UN RÉSOLVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.12.2024   Bulletin 2024/51**

(73) Proprietor: **ABB Schweiz AG
5400 Baden (CH)**

(72) Inventors:
• **ROBERTS, Richard
82205 Gilching (DE)**

• **HÖSL, Werner
92507 Nabburg (DE)**

(74) Representative: **Maiwald GmbH
Engineering
Elisenhof
Elisenstrasse 3
80335 München (DE)**

(56) References cited:
**SE-A1- 1 451 279     US-B2- 10 884 037
US-B2- 7 513 169**

**Description**

The present invention relates to methods and apparatus for monitoring a resolver, in particular for monitoring a resolver associated to a joint in an articulated robot arm.

An articulated robot arm comprises a plurality of links, which are coupled to each other, to a base or to an end effector by rotatable joints. A link of such a robot arm usually houses a motor and a gear for driving the rotation of a neighboring joint, and power and signal wires for the motor of this link and for motors of more distal links and, possibly, of the end effector. In operation, movement of the robot tends to wear on the isolation of the wires. In many cases, the isolation will not break down abruptly, but its resistance will decrease gradually, thereby distorting measurement signals that are fed back to a controller. Such distortion can cause the controller to derive from the measurement signals a position of the robot that differs from the real position. Such a deviation not only affects the precision with which the robot can carry out a given task but can cause the robot to violate safety limitations (e.g. position limits) and thus potentially endanger people in its vicinity. In general, the lower the isolation resistance, the larger the potentially undetected position error. The US 2018073895 A1 refers to an angular resolver imbalance detection. The US2007251332 A1 refers to a rotational position measuring device. The SE 1451279 A1 refers to a resolver system with fault detection.

Conventionally, a resolver comprises first and second winding assemblies, which are rotatable with respect to each other and are inductively coupled so that when a current is flowing in one of the assemblies, a voltage will be induced in the other. One of these assemblies, here referred to as the first winding assembly, has a sine winding and a cosine winding arranged so that when inductive coupling between the sine winding and the second winding assembly is zero, inductive coupling between the cosine winding and the second winding assembly is at a maximum, and when inductive coupling between the cosine winding and the second winding assembly is zero, inductive coupling between the sine winding and the second winding assembly is at a maximum.

Theoretically, the total inductive coupling between the first and second winding assemblies does not depend on the relative orientation of the winding assemblies. I.e. when the exciting current is passed through the second wiring assembly, the sum of squares of the voltages induced in sine and cosine windings should be independent of relative orientation, and if it is passed though the sine and cosine windings, the voltage induced in the second winding assembly should be independent of orientation. However, when there is a short circuit or a reduced isolation resistance in the wires associated to a winding of the first winding assembly, a voltage induced in that winding or a current supplied to it will be shunted, so that the apparent total inductive coupling becomes dependent on orientation.

Regrettably, the total coupling may also be influenced by various other factors. Installation and manufacturing tolerances can lead to harmonics being induced in the measurements, which in turn lead to variations in the total inductive coupling that depend on the orientation of the shaft and degrade the precision with which the relative orientation of the winding assemblies of a given resolver can be inferred from the measured inductive coupling. Such tolerances may also cause the coupling to vary globally from one resolver to another. Coupling may also depend on the operating temperature of the resolver, so that in the course of time it may vary quite unpredictably.

In order to avoid detection of a failure when the resolver is actually operating normally, some fluctuations of the inductive coupling therefore have to be allowed. If total coupling in a resolver is found to vary by e.g. $\pm 10\%$ due to variations of operating temperature, it may be necessary to allow variations of total inductive coupling of $\pm 20\%$ to be reasonably certain not to detect a failure of the resolver when the deviation is actually due to a change in temperature. In a situation where the second winding assembly of the resolver faces the cosine winding, the voltage induced there by a current flowing in the second winding assembly is 100%, and there is a short circuit in the sine winding, this short circuit wouldn't be detected before the coupling has dropped by 20% to 80%, i.e. unless the assemblies have rotated with respect to each other by an angle $\theta$ which satisfies $\cos(\theta)=0.8$. Position detection by the resolver can thus be wrong by up to $\theta=\pm 36.9°$ before a malfunction of the resolver is detected.

In fact, if a worst case calculation is performed, then for a given resolver, the maximum coupling may be up to 120% of the rated value. In such a case, there can be a rotation by up $\theta=\arccos(0.8/1.2)=\pm 48.2°$ before a malfunction is detected.

When there is no short circuit, but isolation resistance is merely reduced, tolerances are still larger, and a decrease in isolation resistance is likely to go unnoticed until shortly before the isolation breaks down completely. There is thus a need, in particular in collaborative robot applications, for a resolver and for a resolver monitoring method by means of which such a breakdown can be detected with as small a position error as possible.

This need is satisfied, according to an aspect of the present invention, by a method for monitoring a resolver as defined in claim 1.

Since the master amount is obtained from the resolver, which is being monitored, the threshold doesn't have to take account of those manufacturing tolerances that would cause the inductive coupling of the resolver in question to deviate permanently from that of another resolver of identical design. The threshold can thus be set more narrowly without increasing the risk of erroneously deciding that the resolver is defective.

According to the invention, step a) comprises the steps of

> a1) obtaining at least one master sample of total inductive coupling between the first and second winding assemblies of said resolver at an instant in time different from said current instant, and
> a2) determining the master amount based on said at least one master sample.

When applied to resolver in an articulated robot arm, at least steps b) and c) will be periodically repeated while the robot is operating, in order to ensure that the robot won't move far enough to endanger a person in its vicinity before a possible defect of the resolver is detected and triggers a stop of the robot.

Step a) might be carried out just once, but is preferably also repeated periodically in order to enable updating the master amount, e.g. by low pass filtering or averaging of successive master samples. Thus the master amount can adapt to changes in the inductive coupling due to slow reversible changes of operating conditions, e.g. of operating temperature of the resolver. In order to prevent the master amount from also adapting to changes of position of the resolver, a time constant with which said low pass filtering or averaging adapts to a change of the master samples should be long in comparison to the operation cycle of the robot. A time constant of at least a minute, preferably several minutes or even hours is adequate.

While the amount of inductive coupling may vary from one resolver to another of identical design, an allowable range in which such variations are accepted should be limited in absolute terms, so that a resolver whose inductive coupling is outside the allowable range is discarded as defective even when new. It may therefore be practical to carry out step a) before the resolver is installed in a robot, and to install it only if it is found in order. The amount of inductive coupling thus measured can be used as an initial master amount for the resolver in question after it has been installed, or the measurement can be repeated after installation.

Whenever the above-described adaptation causes the master amount to adopt a value outside the allowable range later on, especially while the robot is operating, this can be regarded as indicative of an irregularity that should also cause the resolver to be found defective.

Just like obtaining the master amount, obtaining a current amount according to the invention is based on obtaining a sample of total inductive coupling. In principle, one sample of total inductive coupling can be used for obtaining the current amount in step b) and deciding whether the resolver is defective in step c), on the one hand, and for updating the master amount to be used in step c) of a subsequent iteration of the method, on the other.

A judgment of the resolver as defective can also be based on a single sample of total inductive coupling falling outside the allowed range. The remedies adopted in case of such a judgment may differ depending on the kind of irregularity detected.

Conventionally, there are two different types of resolvers. In a first type not falling under the scope of the invention, an alternating current is passed through the second winding assembly to induce a magnetic field, voltages induced by said magnetic field in sine and cosine windings of the first winding assembly are sampled, and a position of the resolver is deduced from these two voltages. When applied to such a resolver, the monitoring method preferably comprises

- passing an alternating current through the second winding assembly to induce a magnetic field,
- sampling voltages induced by said magnetic field in sine and cosine windings of the first winding assembly, and
- using as said current sample or said master sample the sum of squares of said sampled voltages.

In a second alternative type, which is the type of resolver according to the invention, first and second alternating currents having a same amplitude and a phase shift of 90° are supplied to sine and cosine windings of the first winding assembly, whereby a magnetic field is generated at the location of the second winding assembly, and the phase of the voltage induced thereby in the second winding assembly is indicative of the orientation of the second winding assembly. When applied to a resolver operating in this second mode, the monitoring method preferably comprises

- providing first and second alternating currents having a same amplitude and a phase shift of 90°,
- passing the first alternating current through the sine winding of the first winding assembly and passing the second alternating current through the cosine winding, so as to generate a magnetic field,
- sampling a voltage induced by said magnetic field in the second winding assembly, and
- using as said current or master sample the square of said sampled voltage.

When the master amount is updated while the resolver operates, changes in resolver characteristics occurring at a lifetime timescale will affect the master amount, and will thus not be detected by comparing the master amount to a current amount of inductive coupling. In order to recognize such slow changes and take account of them, the method may further comprise steps

> d) storing an initial master amount obtained by an initial execution of step a), and
> e) repeating step a) in order to obtain an updated master amount, and deciding that the resolver is defective if a difference between the initial master amount and the updated master amount exceeds a predetermined threshold.

Instead or additionally, irregularities of inductive coupling can be detected by

d) storing an allowable range of the total inductive coupling, and
e) repeating step a) in order to obtain an updated master amount, and deciding that the resolver is defective if the updated master amount is outside the allowable range.

When isolation is wearing down somewhere in the wiring of the resolver, and the wires are moved, a short circuit may occur just occasionally. Therefore, it may be appropriate to decide that the resolver is defective if a single sample of the total inductive coupling is outside the allowable range.

According to a second aspect, the invention provides a resolver controller as defined in claim 6.

The same controller can further be adapted to deduce an angular position of the resolver from the current amount of total inductive coupling. According to a further aspect, the above-enounced need is satisfied by a resolver assembly comprising the controller defined above, and a resolver associated to it.

Such an assembly can further comprise an articulated robot arm having a joint to which the resolver is associated.

According to a still further aspect, the invention can be embodied in a computer-readable storage medium as defined in claim 10.

Further features and advantages of the invention will become apparent from the subsequent description of embodiments, referring to the appended drawings.

Fig.1 is a schematic view of a robot and its controller;
Fig. 2 is a schematic diagram of a resolver, and
Fig. 3 is a flowchart of a resolver monitoring method carried out by the controller.

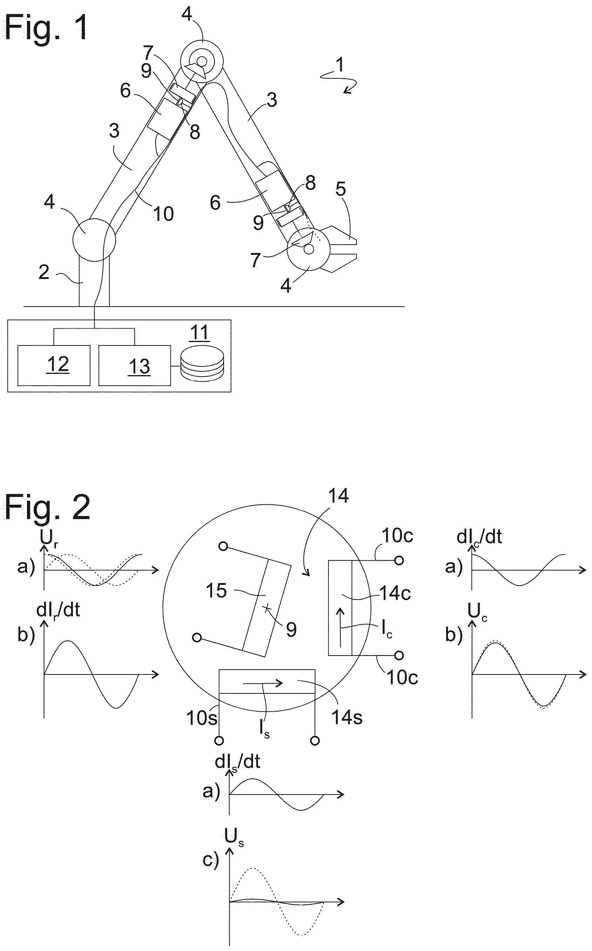

Fig. 1 is a schematic view of a robot system comprising an articulated robot arm 1. The robot arm 1 has a stationary base 2 fixed to a support, and a plurality of links 3 rotatably connected to each other and to the base 2 by joints 4. The most distal link carries an end effector 5. The links 3 are shown with part of their casing removed, so that motors 6 and gears 7 for driving rotation of the joints 4 can be seen inside the casing. A resolver for measuring a rotation position could be mounted at the axis of rotation of each joint 4; in the embodiment of Fig. 1 a resolver 8 is mounted at a shaft 9 extending from the motor 6 to the reducing gear 7.

A wire harness 10 extends along the articulated arm 1 between a controller 11 on one end and the motors 6 and resolvers 8 on the other, supplying the motors 6 with energy from a power supply circuit 12, and feeding back output from the resolvers 8 to a processor 13. The wire harness 10 must adapt to every movement of the robot arm 1, which may wear down the isolation of individual wires in it.

Fig. 2 is a schematic diagram of one of said resolvers 8. The resolver 8 has two winding assemblies 14, 15 which are rotatable with respect to one another. Assembly 14 comprises two windings, referred to as sine winding 14s and cosine winding 14c, whose axes extend at right angles to one another in a plane perpendicular to the axis of rotation, i.e. to shaft 9. Assembly 15 is a single winding which, when rotated by shaft 9, alternatingly faces either sine winding 14s or cosine winding 14c. In one of the assemblies 14, 15, windings are directly connected to the controller 11 by dedicated wires 10c, 10s of harness 10; in the other, preferably assembly 15, connection is made via a sliding contact or by inductive coupling.

The resolver 8 can operate in a stator excitation regime or a rotor excitation regime.

In stator excitation regime, excitation currents $I_s$, $I_c$ from power supply circuit 12 having a 90° phase shift flow through windings 14s, 14c, as illustrated in diagrams a) next to these windings in Fig.2. Winding assembly 15 rotates in the combined magnetic fields of both windings 14s, 14c. The frequency of the excitation currents $I_s$, $I_c$ is much higher than the rotation frequency of shaft 9, preferably above 1 kHz, so that induction in winding 15 due to rotation is negligible. Depending on orientation of the winding 15, currents in sine and cosine windings 14s, 14c contribute in variable proportions to the voltage $U_r$ induced in winding 15. Thus, in normal operation, the amplitude of the induced voltage $U_r$ is constant, and its phase is representative of orientation of the shaft 9.

If a short circuit occurs in the wires 10s of sine winding 14s while the winding 15 faces the cosine winding, this will have no effect on the induced voltage $U_r$, since in this orientation the sine winding 14s doesn't contribute. When the shaft 9 continues to rotate, the phase of the induced voltage $U_r$ will not change; so the controller 11 receives no feedback that the joint is actually moving. Instead, the amplitude of the induced voltage $U_r$ gradually decreases, and a failure can be diagnosed when the amplitude has dropped below an appropriately defined threshold.

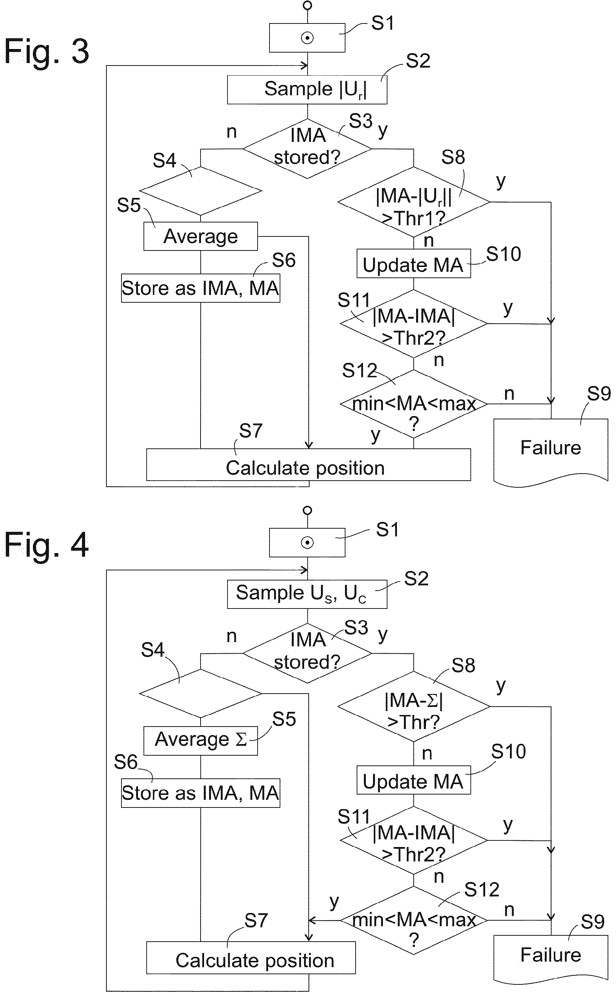

Fig. 3 is a flowchart of a method for monitoring the functionality of the resolver 8 carried out by processor 13 of controller 11. In step S1, the controller 11 is switched on, and power supply circuit 12 starts providing alternating current to windings 14s, 14c. When these are stable, a sample of the amplitude |U| and phase of the voltage U induced in winding 15 is taken in step S2.

Step S3 checks whether an initial master amount IMA of this amplitude has been stored previously. If this is not the case, i.e. if the resolver 8 is used for the very first time, the sample obtained in step S2 may be stored as the IMA in step S6. Alternatively, in order to reduce the influence of noise or if it has to be expected that the amplitude will change on a short timescale e.g. due to the resolver becoming warm in operation, the IMA can be based on several samples: In step S4, it is decided whether a sufficient number of samples has been collected or some other appropriate criterion is fulfilled. If not, the process calculates the position of winding 15 based on the phase of the sample (S7), waits for a predetermined time interval to pass and returns to S2 in order to obtain another sample. If yes, an average of the collected samples is obtained (S5), and the result is stored (S6) as both the IMA and as a potentially time-variable master amount MA, to be discussed in detail later.

The average of step S4 can be obtained in any appropriate way, by feeding the samples in analog form through a low-pass filter or by performing calculations, e.g. calculating a floating average, on the samples in digital form.

After the IMA and the MA have been calculated and stored, the process branches from step S3 to step S8 in which the difference between the MA and the sample amplitude |U| is calculated and compared to a threshold Thr1. Since the IMA has been obtained specifically for the resolver in question, and the MA has been adapted based on earlier sample amplitudes |U| obtained for this resolver, the threshold Thr1 doesn't have to allow for differences in inductive coupling between different resolvers of the same design, nor for temperature-dependent variations of the inductive coupling, and can be set to a small value. Considering the fact that in normal operation the amplitude |U| should not change at all, the threshold can be set to a few % or even less of MA.

If this threshold Thr1 is exceeded, it is concluded in step S9 that the resolver is defective. The controller then stops all movement of the robot arm 1 and outputs a message describing the defect.

If the threshold Thr1 is not exceeded, the resolver appears to be operating normally. In that case the sample |U| is used for updating the MA in step S10. Similar to step S5, this can be done by low-pass filtering successive samples |U| or by calculation. For example, when an n-th sample $|U_n|$ has been obtained in S2, and the current master amount $MA_{n-1}$ has been obtained based on the preceding n-1 samples, an updated master amount $MA_n$ can be calculated as $MA_n = (1-\varepsilon) MA_{n-1} + \varepsilon|U_n|$, wherein $\varepsilon$ is a positive real number much smaller than 1. A specific choice of $\varepsilon$ or of the time constant will have to take into account details of the resolver and of its environment; the time constant should be small enough to ensure that changes of |U| due to reversible effects which aren't representative of isolation wear, in particular temperature changes occurring under normal operation of the robot arm 1, won't cause the threshold Thr1 to be exceeded.

In an alternative embodiment, the IMA might be predefined by the manufacturer, typically to have a same value for all resolvers of identical design. In that case, when the resolver is started for the first time, the master amount MA is set equal to the IMA, and the method proceeds from S2 directly to S8.

Theoretically, when one of windings 14s, 14c is short-circuited and the shaft 9 rotates extremely slowly, the updating of S10 might allow MA to adapt to the change in |U|, so that the shaft 9 might rotate indefinitely without the short circuit being detected. In practice, this is not a problem, since the change of |U| would have to occur on a timescale similar to that of heating effects. However, so slow a movement will not present a safety problem to persons in the vicinity of the robot arm 1.

Further, even such a slow movement or other slow changes in the resolver, such as aging effects, will be detected in step S11, in which the difference between the updated MA and the IMA is compared to a threshold Thr2, and/or it is verified whether in step S12 the updated MA is within an allowable range [min, max], which may be specified by the manufacturer of the resolver for all resolvers of a given design. This threshold can amount to several percent, e.g. up to 10 or 20, of the IMA. When this threshold is exceeded, or the updated MA is outside the allowable range [min, max], the process branches to S9, already described above; else the sample |U| is used in step S7 to calculate the position of the winding 15.

When the isolation is wearing down somewhere in wire harness 10, movements of the robot arm 1 may cause leak current through the isolation to vary wildly. While the resolver may be working perfectly most of the time, there may be an occasional short instant when a defective spot of the isolation touches a conductive surface adjacent to the wire harness, and the induced voltage breaks down. Therefore, additionally or as an alternative to steps S11, S12 described above, the resolver can be judged to be defective when $|U_r|$ is outside the allowable range [min, max].

In rotor excitation regime, which does not fall under the scope of the present invention, an excitation current $I_r$ from power supply circuit 12 flows through winding assembly 15, as illustrated in diagram b) next to winding 15 in Fig.2. When winding assembly 15 faces cosine winding 14c, the voltage $U_c$ induced in it is at a maximum, shown as a dotted line in the diagram b) adjacent to winding 14c, whereas the voltage induced Us in winding 14s is zero. In the configuration of Fig. 2, with winding assembly 15 rotated slightly out of parallel to winding 14c, $U_c$ is slightly reduced, as shown by a solid line in the associated diagram, and nonzero induction is visible in diagram b) of winding 14s. In normal operation, the sum of squares of these voltages should be constant. However, when there is an insulation defect in the wires extending from winding 14s to the controller 11, this voltage will be short-circuited, which affects the sum of squares of the voltages detected by the controller 11.

Fig. 4 is a flowchart of a method for monitoring the resolver 8 in rotor excitation regime. In step S1, the controller is switched on, and power supply circuit 12 starts providing alternating current $I_r$ to winding assembly 15. When the current $I_r$ is stable, samples of the ampli-

tudes $|U_s|$, $|U_c|$ induced in windings 14s, 14c are taken in step S2, and a sum of squares $\Sigma = |U_s|^2 + |U_c|^2$ of these is calculated.

Step S3 checks whether an initial master amount IMA of this sum has been stored previously. If this is not the case, i.e. if the resolver 8 is used for the very first time, the sample sum obtained in step S2 may be stored as the IMA in step S6. Alternatively, if it has to be expected that the amplitudes $|Us|$, $|Uc|$ will change on a short timescale e.g. due to the resolver 8 becoming warm in operation, the IMA can be based on several samples: In step S4, it is decided whether a sufficient number of samples has been collected or some other appropriate criterion is fulfilled. If not, the process calculates the position of winding 15 based on the ratio and the phase relationship of the samples Us, Uc (S7), waits for a predetermined time interval to pass and returns to S2 in order to obtain another sample. If yes, an average of the sums of squares $\Sigma$ of the collected samples is obtained (S5), and the result is stored (S6) as both the IMA and as a potentially time-variable master amount MA.

The average of step S4 can be obtained in any appropriate way, by feeding the input data $\Sigma$ in analog form through a low-pass filter or by performing calculations, e.g. calculating a floating average, on these in digital form.

After the IMA and the MA have been calculated and stored, the process branches from step S3 to step S8. Step S8 calculates the difference between the MA and the sum of squares $\Sigma$ obtained in the preceding iteration of step S2. If there is a short circuit in the wires of either the sine or the cosine winding, only induction in the other will contribute to the sum of squares $\Sigma$. So, while winding assembly 15 is facing e.g. the cosine winding 14c, a short circuit in the wires of sine winding 14s cannot be detected, but when winding assembly 15 begins to turn towards sine winding 14s, the contribution of $U_c$ to $\Sigma$ decreases so that the difference will finally exceed a threshold Thr1, and will cause failure of the resolver to be detected in step S9.

If no failure is detected, the sample sum $\Sigma$ is used for updating the MA in step S10 as described above referring to Fig 3. As above, a slow movement or other slow changes in the resolver, such as aging effects, will be detected in step S11, in which the difference between the updated MA and the IMA is compared to a threshold Thr2 and/or to the allowable range. Also, in analogy to the method of Fig. 3, it can be checked whether $\sqrt{\Sigma}$ is inside the allowed range [min. max].

### Reference numerals

1  robot arm
2  base
3  link
4  joint
5  end effector
6  motor
7  gear
8  resolver
9  shaft
10  wire harness
10c  wire
10s  wire
11  controller
12  power supply circuit
13  processor
14  winding assembly
14c  cosine winding
14s  sine winding
15  winding assembly

### Claims

1. A method for monitoring a resolver (8), the resolver (8) comprising first and second winding assemblies (14, 15) which are rotatable with respect to each other and are inductively coupled, the first winding assembly (14) having a sine winding (14s) and a cosine winding (14c) arranged so that when inductive coupling between the sine winding (14s) and the second winding assembly (15) is zero, inductive coupling between the cosine winding (14c) and the second winding assembly (15) is at a maximum, and when inductive coupling between the cosine winding (14c) and the second winding assembly (15) is zero, inductive coupling between the sine winding (14s) and the second winding assembly (15) is at a maximum,

   the method comprising the steps of

   a) obtaining (S6, S10) a master amount (MA) of total inductive coupling between the first and second winding assemblies (14, 15) of said resolver (8),
   b) obtaining (S2) a current amount ($|U_r|$, $\Sigma$) of total inductive coupling at a current instant in time,
   c) deciding (S8) that the resolver (8) is defective if a difference between the current amount ($|U_r|$, $\Sigma$) and the master amount (MA) exceeds a predetermined threshold (Thr1),

   wherein step a) comprises the steps of

   a1) obtaining (S2) at least one master sample of total inductive coupling between the first and second winding assemblies of said resolver at an instant in time different from said current instant, and
   a2) determining (S6) the master amount (MA) based on said at least one master sample,

wherein step b) comprises the step of obtaining (S2) a current sample of total inductive coupling, wherein obtaining a current sample and/or obtaining a master sample comprises

- providing (S1) first and second alternating currents ($I_s$, $I_c$) having a same amplitude and a phase shift of 90°,
- passing (S1) the first alternating current ($I_s$) through the sine winding (14s) of the first winding assembly (14) and passing (S1) the second alternating current ($I_c$) through the cosine winding (14c), so as to generate a magnetic field,
- sampling (S2) a voltage ($U_r$) induced by said magnetic field in the second winding assembly (15), and
- using as said current sample or master sample

the square of said sampled voltage.

2. The method of claim 1, wherein step a) is periodically repeated and comprises low pass filtering or averaging (S6, S10) of successive master samples, preferably with a time constant of at least a minute, preferably several minutes.

3. The method of any of the preceding claims, further comprising steps

d) storing (S2) an initial master amount (IMA) obtained by an initial execution of step a), and
e) repeating step a) in order to obtain (S10) an updated master amount, and deciding (S11) that the resolver (8) is defective if a difference between the initial master amount (IMA) and the updated master amount (MA) exceeds a predetermined threshold (Thr2).

4. The method of any of the preceding claims, further comprising steps

d) storing (S2) an allowable range of the total inductive coupling, and
e) repeating step a) in order to obtain (S10) an updated master amount, and deciding (S12) that the resolver (8) is defective if the updated master amount (MA) is outside the allowable range.

5. The method of any of the preceding claims, further comprising steps

d) storing (S2) an allowable range of the total inductive coupling, and

e) deciding (S12) that the resolver (8) is defective if the current amount ($|U_r|$, $\Sigma$) of total inductive coupling is outside the allowable range.

6. A resolver controller (11) comprising a power supply circuit (12) for providing an alternating current ($I_r$; $I_s$, $I_c$) to one of first and second winding assemblies (14, 15) of a resolver (8), measurement circuitry for measuring voltage ($U_s$, $U_c$; $U_r$) induced in the other of said first and second winding assemblies (14, 15) by said alternating current ($I_r$; $I_s$, $I_c$), and a processor (13) adapted a) to obtain (S6, S10) a master amount (MA) of total inductive coupling between the first and second winding assemblies (14, 15) of said resolver (8) from voltage data measured by said measurement circuitry, whereby the processor is adapted to obtain (S2) at least one master sample of total inductive coupling between the first and second winding assemblies at an instant in time different from said current instant and to determine the master amount (MA) based on said at least one master sample, and

b) to obtain (S2) at least one current amount ($U_r$; $\Sigma$) of total inductive coupling at a current instant in time from voltage data measured by said measurement circuitry, wherein obtaining a current amount comprises obtaining (S2) a current sample of total inductive coupling, wherein to obtain a current sampe and/or to obtain a master sample comprises

- to provide (S1) first and second alternating currents ($I_s$, $I_c$) having a same amplitude and a phase shift of 90°,
- to pass (S1) the first alternating current ($I_s$) through the sine winding (14s) of the first winding assembly (14) and passing (S1) the second alternating current ($I_c$) through the cosine winding (14c), so as to generate a magnetic field,
- to sample (S2) a voltage ($U_r$) induced by said magnetic field

in the second winding assembly (15), and

- to use as said current sample or master sample the square of said sampled voltage, and

c) to decide (S8) that the resolver (8) is defective if a difference between the current amount ($U_r$; $\Sigma$) and the master amount (MA) exceeds a predetermined threshold (Thr1).

7. The resolver controller of claim 6, wherein the processor (13) is further adapted to deduce (S7) an angular position of the resolver (8) from the voltage

$(U_s, U_c; U_r)$ induced in the other of said first and second winding assemblies (14, 15).

8. A resolver assembly comprising the resolver controller (11) of any of claims 6 or 7 and an associated resolver (8).

9. The resolver assembly of claim 8, wherein the resolver (8) is configured to be associated to a joint (4) of an articulated robot arm (1).

10. A computer-readable storage medium having stored thereon a plurality of instructions which, when executed by the resolver controller of claim 6, causes the resolver controller to perform the method of claim 1.

**Patentansprüche**

1. Ein Verfahren zur Überwachung eines Resolvers (8), wobei der Resolver (8) erste und zweite Wicklungsbaugruppen (14, 15) umfasst, die gegeneinander drehbar und induktiv gekoppelt sind, die erste Wicklungsbaugruppe (14) eine Sinuswicklung ($14s$) und eine Kosinuswicklung ($14_c$) aufweist, die so angeordnet sind, dass bei Null induktiver Kopplung zwischen der Sinuswicklung ($14_s$) und der zweiten Wicklungsbaugruppe (15) die induktive Kopplung zwischen der Kosinuswicklung ($14_c$) und der zweiten Wicklungsbaugruppe (15) maximal ist, und wenn die induktive Kopplung zwischen der Kosinuswicklung ($14_c$) und der zweiten Wicklungsbaugruppe (15) null ist, induktive Kopplung zwischen der Sinuswicklung ($14_s$) und der zweiten Wicklungsanordnung (15) ist maximal, das Verfahren umfasst die Schritte:

a) Ermitteln (S6, S10) eines Masterwerts (MA) der gesamten induktiven Kopplung zwischen der ersten und zweiten Wicklungsanordnung (14, 15) des genannten Resolvers (8),
b) Ermitteln (S2) eines aktuellen Werts ($|Ur|, \Sigma$) der gesamten induktiven Kopplung zu einem aktuellen Zeitpunkt, c) Entscheiden (S8), dass der Resolver (8) defekt ist, wenn die Differenz zwischen dem aktuellen Wert ($|Ur|, \Sigma$) und dem Masterwert (MA) einen vorgegebenen Schwellenwert (Thr1) überschreitet, wobei Schritt a) die Schritte umfasst

a1) Erhalten (S2) von mindestens einer Masterprobe der gesamten induktiven Kopplung zwischen der ersten und zweiten Wicklungsanordnung des genannten Resolvers zu einem Zeitpunkt, der sich von dem aktuellen Zeitpunkt unterscheidet, und a2) Bestimmen (S6) der Mastergröße (MA) basierend auf der genannten mindestens einen Masterprobe, wobei Schritt b) den Schritt der Gewinnung (S2) einer Stromprobe der gesamten induktiven Kopplung umfasst,

wobei das Erhalten einer aktuellen Probe Folgendes umfasst:

- Bereitstellen (S1) von erstem und zweitem Wechselstrom ($I_s, I_c$) mit derselben Amplitude und einem Phasenversatz von 90°,
- Durchleiten (S1) des ersten Wechselstroms ($I_s$) durch die Sinuswicklung ($14_s$) der ersten Wicklungsanordnung (14) und Durchleiten (S1) des zweiten Wechselstroms (Ic) durch die Kosinuswicklung ($14_c$), um ein Magnetfeld zu erzeugen,
- Abtasten (S2) einer von dem genannten Magnetfeld in der zweiten Wicklungsanordnung (15) induzierten Spannung ($U_r$), und
- Verwenden als genannten Stromprobe oder Masterprobe das Quadrat der genannten abgetasteten Spannung.

2. Das Verfahren nach Anspruch 1, wobei Schritt a) periodisch wiederholt wird und eine Tiefpassfilterung oder Mittelung (S6, S10) aufeinanderfolgender Master-Samples umfasst, vorzugsweise mit einer Zeitkonstante von mindestens einer Minute, bevorzugt mehreren Minuten.

3. Das Verfahren eines der vorhergehenden Ansprüche, umfassend weiterhin die Schritte d) Speichern (S2) eines anfänglichen Masterbetrags (IMA), der durch eine anfängliche Ausführung von Schritt a) erhalten wurde, und e) Wiederholen von Schritt a), um (S10) einen aktualisierten Masterbetrag zu erhalten, und Feststellen (S11), dass der Resolver (8) defekt ist, wenn die Differenz zwischen dem anfänglichen Masterbetrag (IMA) und dem aktualisierten Masterbetrag (MA) einen vorher festgelegten Schwellenwert (Thr2) überschreitet.

4. Das Verfahren nach einem der vorhergehenden Ansprüche, umfassend ferner die Schritte d) Speichern (S2) eines zulässigen Bereichs der gesamten induktiven Kopplung, und e) Wiederholung von Schritt a), um (S10) eine aktualisierte Hauptgröße zu erhalten, und Feststellen (S12), dass der Resolver (8) defekt ist, wenn die aktualisierte Hauptgröße (MA) außerhalb des zulässigen Bereichs liegt.

5. Das Verfahren nach einem der vorhergehenden Ansprüche, weiter umfassend 20 Schritte d) Speichern (S2) eines zulässigen Bereichs der gesamten induktiven Kopplung, und e) Entscheiden (S12), dass der Resolver (8) defekt ist, wenn die aktuelle Höhe ($|Ur|, \Sigma$) der gesamten induktiven Kopplung außerhalb des zulässigen Bereichs liegt.

**6.** Ein Resolver-Controller (11), der eine Stromversorgungsschaltung (12) umfasst, um einen Wechselstrom ($I_r$; $I_s$, $I_c$) zu einer der ersten und zweiten Wicklungsanordnungen (14, 15) eines Resolvers (8) bereitzustellen, Messschaltungen zum Messen der an der anderen der ersten und zweiten Wicklungsanordnungen (14, 15) durch den genannten Wechselstrom ($I_r$; $I_s$, $I_c$) induzierten Spannung ($U_s$, $U_c$; $U_r$) sowie einen Prozessor (13), der angepasst ist

a. um (S6, S10) eine Hauptmenge (MA) der gesamten induktiven Kopplung zwischen der ersten und zweiten Wicklungsanordnung (14, 15) des genannten Resolvers (8) aus den von der genannten Messschaltung gemessenen Spannungsdaten zu ermitteln, wobei der Prozessor so ausgelegt ist, dass er (S2) mindestens eine Masterprobe der gesamten induktiven Kopplung zwischen der ersten und zweiten Wicklungsanordnung zu einem vom aktuellen Zeitpunkt verschiedenen Zeitpunkt erhält und den Masterwert (MA) auf der Grundlage dieser mindestens einen Masterprobe bestimmt, und
b. mindestens einen Stromwert ($U_r$; $\Sigma$) der Gesamtinduktivkopplung zu einem bestimmten Zeitpunkt aus den von der genannten Messschaltung gemessenen Spannungsdaten zu erhalten, worin das Ermitteln eines Stroms und/oder das Erhalten einer Masterprobe umfasst:

- Bereitstellen (S1) von erster und zweiter Wechselspannung ($I_s$, $I_c$) mit gleicher Amplitude und einer Phasenverschiebung von 90°,- Durchleiten (S1) der ersten Wechselspannung ($I_s$) durch die Sinuswicklung ($14_s$) der ersten Wicklungsanordnung (14) und Durchleiten (S1) der zweiten Wechselspannung ($I_c$) durch die Kosinuswicklung ($14_c$), um ein Magnetfeld zu erzeugen,- Abtasten (S2) einer durch das Magnetfeld induzierten Spannung ($U_r$) in der zweiten Wicklungsanordnung (15) und
- Verwenden der besagten Stromprobe oder Masterprobe des Quadrats der abgetasteten Spannung als besagten Stromwert, und

c. Feststellen (S8), dass der Resolver (8) defekt ist, wenn die Differenz zwischen dem Stromwert ($U_r$; $\Sigma$) und dem Masterwert (MA) einen vorgegebenen Schwellenwert (Thr1) überschreitet.

**7.** Der Resolver-Controller nach Anspruch 6, wobei der Prozessor (13) ferner dazu eingerichtet ist, (S7) eine Winkelposition des Resolvers (8) aus der in der anderen der genannten ersten und zweiten Wicklungsanordnungen (14, 15) induzierten Spannung ($U_s$, $U_c$; $U_r$) zu bestimmen.

**8.** Eine Resolver-Baugruppe, die den Resolver-Controller (11) nach Anspruch 6 oder 7 und einen zugehörigen Resolver (8) umfasst.

**9.** Die Resolver-Baugruppe nach Anspruch 8, wobei der Resolver (8) ausgebildet ist, mit einem Gelenk (4) eines gelenkigen Roboterarms (1) verbunden zu sein.

**10.** Ein computerlesbares Speichermedium, auf dem eine Mehrzahl von Anweisungen gespeichert ist, die, wenn sie von dem Resolver nach Anspruch 6 ausgeführt werden, dazu führen, dass der Resolver-Controller das Verfahren nach Anspruch 1 ausführt.

**Revendications**

**1.** Procédé de surveillance d'un résolveur (8), le résolveur (8) comprenant des premier et deuxième ensembles d'enroulement (14, 15) rotatifs l'un par rapport à l'autre et couplés inductivement, le premier ensemble d'enroulement (14) possédant un enroulement sinus (14s) et un enroulement cosinus (14c) disposés de telle manière que, lorsque le couplage inductif entre l'enroulement sinus (14s) et le deuxième ensemble d'enroulement (15) est nul, le couplage inductif entre l'enroulement cosinus (14c) et le deuxième ensemble d'enroulement (15) est maximal et, lorsque le couplage inductif entre l'enroulement cosinus (14c) et le deuxième ensemble d'enroulement (15) est nul, le couplage inductif entre l'enroulement sinus (14s) et le deuxième ensemble d'enroulement (15) est maximal,

le procédé comprenant les étapes suivantes

a) l'obtention (S6, S10) d'une quantité maîtresse (MA) de couplage inductif total entre les premier et deuxième ensembles d'enroulement (14, 15) dudit résolveur (8),
b) l'obtention (S2) d'une quantité présente (|$U_r$|, $\Sigma$) de couplage inductif total à un instant présent,
c) la décision (S8) que le résolveur (8) est défectueux si une différence entre la quantité présente (|$U_r$|, $\Sigma$) et la quantité maîtresse (MA) dépasse un seuil prédéterminé (Thr1),

l'étape a) comprenant les étapes suivantes

a1) l'obtention (S2) d'au moins un échantillon maître de couplage inductif total entre les premier et deuxième ensembles d'enroulement dudit résolveur à un instant différent dudit instant présent, et
a2) la détermination (S6) de la quantité maîtresse (MA) sur la base dudit au moins un échantillon maître,

l'étape b) comprenant l'étape d'obtention (S2) d'un échantillon présent de couplage inductif total, l'obtention d'un échantillon présent et/ou l'obtention d'un échantillon maître comprenant

- la fourniture (S1) de premier et deuxième courants alternatifs ($I_s$, $I_c$) présentant une même amplitude et un déphasage de 90°,
- le passage (S1) du premier courant alternatif ($I_s$) dans l'enroulement sinus (14s) du premier ensemble d'enroulement (14) et le passage (S1) du deuxième courant alternatif ($I_c$) dans l'enroulement cosinus (14c), de façon à générer un champ magnétique,
- l'échantillonnage (S2) d'une tension ($U_r$) induite par ledit champ magnétique dans le deuxième ensemble d'enroulement (15), et
- l'utilisation, comme dit échantillon présent ou échantillon maître, du carré de ladite tension échantillonnée.

2. Procédé selon la revendication 1, dans lequel l'étape a) est répétée périodiquement et comprend le filtrage passe-bas ou le moyennage (S6, S10) d'échantillons maîtres successifs, de préférence avec une constante de temps d'au moins une minute, de préférence de plusieurs minutes.

3. Procédé selon l'une quelconque des revendications précédentes, comprenant en outre les étapes suivantes

d) le stockage (S2) d'une quantité maîtresse initiale (IMA) obtenue par une exécution initiale de l'étape a), et
e) la répétition de l'étape a) afin d'obtenir (S10) une quantité maîtresse mise à jour, et la décision (S11) que le résolveur (8) est défectueux si une différence entre la quantité maîtresse initiale (IMA) et la quantité maîtresse (MA) mise à jour dépasse un seuil prédéterminé (Thr2).

4. Procédé selon l'une quelconque des revendications précédentes, comprenant en outre les étapes suivantes

d) le stockage (S2) d'une plage admissible du couplage inductif total, et
e) la répétition de l'étape a) afin d'obtenir (S10) une quantité maîtresse mise à jour, et la décision (S12) que le résolveur (8) est défectueux si la quantité maîtresse (MA) mise à jour sort de la plage admissible.

5. Procédé selon l'une quelconque des revendications précédentes, comprenant en outre les étapes suivantes

d) le stockage (S2) d'une plage admissible du couplage inductif total, et
e) la décision (S12) que le résolveur (8) est défectueux si la quantité présente ($|U_r|$, $\Sigma$) de couplage inductif total sort de la plage admissible.

6. Contrôleur (11) de résolveur, comprenant un circuit d'alimentation (12) destiné à fournir un courant alternatif ($I_r$; $I_s$, $I_c$) à l'un de premier et deuxième ensembles d'enroulement (14, 15) d'un résolveur (8), une circuiterie de mesure destinée à mesurer la tension ($U_s$, $U_c$ ; $U_r$) induite dans l'autre desdits premier et deuxième ensembles d'enroulement (14, 15) par ledit courant alternatif ($I_r$; $I_s$, $I_c$), et un processeur (13) adapté a) à obtenir (S6, S10) une quantité maîtresse (MA) de couplage inductif total entre les premier et deuxième ensembles d'enroulement (14, 15) dudit résolveur (8) à partir de données de tension mesurées par ladite circuiterie de mesure, de sorte que le processeur est adapté à obtenir (S2) au moins un échantillon maître de couplage inductif total entre les premier et deuxième ensembles d'enroulement à un instant différent dudit instant présent et à déterminer la quantité maîtresse (MA) sur la base dudit au moins un échantillon maître, et

b) à obtenir (S2) au moins une quantité présente ($U_r$ ; $\Sigma$) de couplage inductif total à un instant présent à partir de données de tension mesurées par ladite circuiterie de mesure, l'obtention d'une quantité présente comprenant l'obtention (S2) d'un échantillon présent de couplage inductif total,
l'obtention d'un échantillon présent et/ou l'obtention d'un échantillon maître comprenant

- la fourniture (S1) de premier et deuxième courants alternatifs ($I_s$, $I_c$) présentant une même amplitude et un déphasage de 90°,
- le passage (S1) du premier courant alternatif ($I_s$) dans l'enroulement sinus (14s) du premier ensemble d'enroulement (14) et le passage (S1) du deuxième courant alternatif ($I_c$) dans l'enroulement cosinus (14c), de façon à générer un champ magnétique,
- l'échantillonnage (S2) d'une tension ($U_r$) induite par ledit champ magnétique dans le deuxième ensemble d'enroulement (15), et
- l'utilisation, comme dit échantillon présent ou échantillon maître, du carré de ladite tension échantillonnée, et

c) à décider (S8) que le résolveur (8) est défectueux si une différence entre la quantité présente ($|U_r|$, $\Sigma$) et la quantité maîtresse (MA) dépasse un seuil prédéterminé (Thr1) .

7. Contrôleur de résolveur selon la revendication 6, dans lequel le processeur (13) est adapté en outre à déduire (S7) une position angulaire du résolveur (8) à partir de la tension ($U_s$, $U_c$ ; $U_r$) induite dans l'autre desdits premier et deuxième ensembles d'enroulement (14, 15).

8. Ensemble de résolveur comprenant le contrôleur (11) de résolveur selon l'une quelconque des revendications 6 ou 7 et un résolveur (8) associé.

9. Ensemble de résolveur selon la revendication 8, dans lequel le résolveur (8) est configuré pour être associé à une articulation (4) d'un bras de robot articulé (1).

10. Support de stockage lisible par ordinateur sur lequel sont stockées une pluralité d'instructions qui, lorsqu'elles sont exécutées par le contrôleur de résolveur selon la revendication 6, amènent le contrôleur de résolveur à réaliser le procédé selon la revendication 1.

# Fig. 1

# Fig. 2

# Fig. 3

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018073895 A1
- US 2007251332 A1

- SE 1451279 A1